# EUROPÄISCHE PATENTANMELDUNG

(11) **EP 4 553 403 A1**
(43) Veröffentlichungstag der Anmeldung: **14.05.2025**
(21) Anmeldenummer: 24211349.6
(22) Anmeldetag: 07.11.2024
(51) Int. Cl.: F24S 25/30, F24S 25/613, F24S 25/65, F24S 25/70, H02S 20/23

(54) **DACHHAKEN**

(30) Priorität: 13.11.2023 DE 102023131546
(71) Anmelder: SL Rack GmbH, 83527 Haag (DE)
(72) Erfinder: Schletter, Ludwig, 83527 Haag i. OB (DE); Hurmer, Richard, 94562 Oberpöring (DE); Bauer, Georg, 83527 Haag i. OB (DE); Achatz, Florian, 94259 Kirchberg i.W. (DE)
(74) Vertreter: Lichtnecker, Markus Christoph

(57) **Zusammenfassung**

Die Erfindung betrifft einen Dachhaken zur Befestigung einer Montageeinheit (10) an einer Dachkonstruktion (12) und/oder an einem Dachelement (46), aufweisend einen Grundträger (14) zur Befestigung des Dachhakens an der Dachkonstruktion (12) und/oder dem Dachelement (46), und einen Träger (32) mit einem Montageabschnitt (34) zur Befestigung der Montageeinheit (10) am Dachhaken.

## Beschreibung

Die Erfindung betrifft einen Dachhaken zur Befestigung einer Montageeinheit, vorzugsweise Montageschiene, an einer Dachkonstruktion und/oder an einem Dachelement, aufweisend einen Grundträger zur Befestigung des Dachhakens an der Dachkonstruktion und/oder an dem Dachelement und einen Träger, vorzugsweise Schienenträger, mit einem Montageabschnitt zur Befestigung der Montageeinheit am Dachhaken.

Dachhaken sind grundsätzlich bekannt. Diese werden beispielsweise zur Montage von Solarpaneelen und/oder Photovoltaik-Modulen eingesetzt. Die Solarpaneele und/oder Photovoltaik-Module werden z.B. an den Montageschienen, welche auch Tragschienen genannt werden, montiert.

Die Dachhaken werden am Grundträger z.B. an Dachkonstruktionen, beispielsweise an Unterkonstruktionen von Schrägdächern, befestigt.

Nachteilig bei bisherigen Dachhaken ist, dass diese entweder für eine horizontale Anbringung der Montageeinheit oder für eine geneigte Anbringung der Montageeinheit geeignet sind. Beispielsweise ist mit einem Dachhaken für eine horizontale Anbringung kein Kreuzverbund möglich.

Es ist daher eine Aufgabe der Erfindung, einen multifunktionalen Dachhaken sowie eine multifunktionale Klemmvorrichtung zu schaffen.

Die Lösung dieser Aufgabe erfolgt durch die Vorrichtungen der unabhängigen Ansprüche.

Erfindungsgemäß ist der Dachhaken zur Befestigung einer Montageeinheit an einer Dachkonstruktion und/oder an einem Dachelement ausgebildet und/oder kann hierzu verwendet werden.

Bei der Montageeinheit kann es sich beispielsweise um eine Montageschiene und/oder ein Auflageelement handeln.

Bei der Dachkonstruktion, beispielsweise Dachunterkonstruktion, kann es sich beispielsweise um Balken und/oder Sparren handeln.

Bei dem Dachelement kann es sich z.B. um einen Dachziegel, einen Dachstein, eine Dachschindel und/oder ein Blech handeln.

An der Montageeinheit, z.B. Montageschiene, welche auch Tragschiene genannt wird, kann beispielsweise ein Solarpaneel und/oder Photovoltaik-Modul montiert werden.

Der Dachhaken weist einen Grundträger zur Befestigung des Dachhakens an der Dachkonstruktion und/oder am Dachelement auf.

Dazu kann ein Grundträger des Dachhakens z.B. eine plattenförmige Basis mit Plattenaussparungen umfassen. An den Plattenaussparungen kann die Basis beispielsweise mittels Schrauben und/oder Bolzen an der Dachkonstruktion befestigt, z.B. verschraubt, werden.

Der Dachhaken weist einen Träger, vorzugsweise Schienenträger, mit einem Montageabschnitt zur Befestigung der Montageeinheit am Dachhaken auf.

Beispielsweise kann der Dachhaken als Profil ausgebildet sein. Das Profil kann zum Beispiel eine rechteckige Querschnittsfläche aufweisen.

Vorzugsweise weist der Dachhaken ein Metallmaterial, z.B. ein Aluminiummaterial, auf oder besteht daraus.

Der Dachhaken weist eine Klemmvorrichtung mit einem Klemmkörper und einem Klemmelement auf.

Der Klemmkörper kann bevorzugt eine Haltestruktur für die Montageeinheit aufweisen.

Bei dem Klemmelement kann es sich vorzugsweise um eine Schraube handeln.

Die Klemmvorrichtung ist dazu ausgebildet, in einer ersten Position zur horizontalen Anbringung der Montageeinheit und einer um 90° gegenüber der ersten Position versetzten zweiten Position zur geneigten Anbringung der Montageeinheit am Montageabschnitt befestigbar zu sein bzw. befestigt werden zu können.

Geneigt bedeutet hierbei eine Richtung parallel bzw. entlang der Dachneigung. Die geneigte Anbringung erfolgt vorzugsweise rechtwinklig zur horizontalen Anbringung.

Die Montageeinheit kann von der Klemmvorrichtung am Montageabschnitt festgeklemmt werden. Beispielsweise kann der Klemmkörper eine Riffelung oder mehrere Riffelungen aufweisen. Dadurch wird der Halt am Montageabschnitt verbessert.

Vorzugsweise können die erste Position und die zweite Position um 90° gegenüber einer vertikalen Achse versetzt sein.

Die Klemmvorrichtung kann somit wahlweise in der ersten Position oder der zweiten Position an der Montageeinheit befestigt werden. Es kann daher dasselbe Bauteil verwendet werden, um eine Montageeinheit horizontal oder geneigt anzubringen.

Der Dachhaken sowie die Klemmvorrichtung sind daher multifunktional.

So kann der Dachhaken einerseits zur Befestigung von horizontal orientierten, z.B. entlang der Dachbreite verlaufenden, Montageeinheiten eingesetzt werden. Andererseits kann der Dachhaken zur Befestigung von geneigten, z.B. in Richtung des Dachfirsts verlaufenden, Montageeinheiten eingesetzt werden. Dabei kann das Dach entweder lediglich mit horizontalen oder lediglich mit geneigten Montageeinheiten versehen werden. Alternativ ist eine Kombination aus horizontalen und geneigten Montageeinheiten als so genannter Kreuzverbund möglich.

Beispielsweise können die erste Position und die zweite Position um 180° gegenüber einer horizontalen Ebene um 180° gedreht sein. Die Orientierung der Haltestruktur wir dadurch geändert. Vorzugsweise ist die Orientierung der Haltestruktur in der ersten Position und der zweiten Position jedoch gleich.

Beispielsweise kann der Träger an einem Fixierabschnitt, vorzugsweise höhenverstellbar, mit dem Grundträger verbindbar oder verbunden sein.

Wird z.B. eine Montageeinheit an mehreren Dachhaken montiert, müssen dabei auftretende Unebenheiten der Dachkonstruktion und/oder der Dachelemente ausgeglichen werden.

Durch die Höhenverstellbarkeit kann insbesondere der Abstand zwischen der Montageeinheit und der Dachkonstruktion und/oder dem Dachelement eingestellt werden.

Der Träger kann relativ zum Grundträger beweglich sein.

Beispielsweise kann der Fixierabschnitt und/oder der Grundträger ein Langloch aufweisen. Vorzugsweise mittels einer Schraube kann eine Fixierung an der gewünschten Position erfolgen. Hierzu kann der Grundträger und/oder der Fixierabschnitt eine Schraubenaufnahme, z.B. eine Aussparung mit einem Gewinde, aufweisen.

Bevorzugt wird die Höhe derart eingestellt, dass sich der Träger an einem Dachelement abstützt.

Alternativ kann der Träger und der Grundträger einstückig ausgebildet und/oder fest miteinander verbunden sein.

Beispielsweise kann der Träger eine Auflage zum Aufliegen auf einem Dachelement aufweisen.

Über die Auflage kann bei entsprechender Höheneinstellung beispielsweise ein Druck auf das Dachelement erzeugt werden. Einerseits wird auf diese Weise ein sicherer Halt des Dachelements gewährleistet. Andererseits werden dadurch, dass sich der Dachhaken im Bereich des Trägers auf dem Dachelement abstützt, die Traglasten verteilt und die statischen Eigenschaften insgesamt verbessert.

Vorzugsweise weist der Grundträger einen Bügel und einen Haken auf, die miteinander verbindbar oder verbunden sind.

Der Grundträger ist in diesem Fall wenigstens zweiteilig ausgebildet.

Vorzugsweise sind der Bügel und der Haken zumindest abschnittsweise parallel zueinander orientiert.

Beispielsweise kann das Dachelement zwischen dem Bügel und dem Haken aufgenommen werden. Der Grundträger umgreift hierbei zumindest einen Abschnitt des Dachelements.

Vorzugsweise kann der Haken L-förmig ausgebildet sein. Der Haken kann eine Basis und einen sich zumindest abschnittsweise senkrecht zur Basis erstreckenden Befestigungsbereich aufweisen. Die Basis kann hierbei bevorzugt als eine Platte mit Plattenaussparungen ausgebildet sein. An den Plattenaussparungen kann die Basis beispielsweise mittels Schrauben und/oder Bolzen an der Dachkonstruktion befestigt, z.B. verschraubt, werden.

Beispielsweise weist der Haken auf einer dem Bügel zugewandten Seite eine Riffelung oder mehrere Riffelungen auf. Dies ermöglicht einen guten Halt an der Unterseite des Dachelements.

Der Bügel und der Haken sind vorzugsweise über eine Steck- und/oder Schraubverbindung miteinander verbindbar oder verbunden. Dadurch wird ein sicherer Halt gewährleistet.

Bevorzugt sind der Bügel und der Haken höhenverstellbar miteinander verbindbar oder verbunden. Auf diese Weise kann eine Anpassung an unterschiedlich dicke Dachelemente erfolgen.

Der maximale Verstellbereich, also der maximale Abstand zwischen dem Bügel und dem Haken, insbesondere einer Basis des Hakens, kann zwischen 2 cm und 10 cm, vorzugsweise zwischen 3 cm und 7 cm, z.B. zwischen 3,6 cm und 6,1 cm, betragen.

Beispielsweise ist der Träger mit dem Bügel höhenverstellbar verbindbar oder verbunden. Der Bügel kann somit an einer Seite mit dem Fixierabschnitt des Trägers und an der anderen Seite mit dem Haken verbunden sein bzw. verbunden werden.

Alternativ zu einer zweiteiligen Ausgestaltung des Grundträgers ist ein einteiliger Grundträger denkbar.

Weiterbildungen der Erfindung sind auch den abhängigen Ansprüchen, der Beschreibung sowie den beigefügten Zeichnungen zu entnehmen.

Gemäß einer Ausführungsform weist die Klemmvorrichtung einen Klemmkörper mit einer Aussparung zum Aufnehmen des Montageabschnitts auf.

Der Klemmkörper kann vorzugsweise ein Metallmaterial, z.B. ein Aluminiummaterial, umfassen oder aus einem Metallmaterial bestehen.

Im eingebauten Zustand kann der Klemmkörper den Montageabschnitt vollumfänglich umgeben.

Der Montageabschnitt ist hierbei in der Aussparung aufgenommen.

Nach einer weiteren Ausführungsform umschließt der Klemmkörper die Aussparung vollumfänglich.

Der Klemmkörper bildet näherungsweise einen Ring bzw. eine Hülse, welche über den Montageabschnitt geschoben und an diesem befestigt werden kann.

Im Gegensatz zu einem Klemmkörper, welcher einen Durchbruch aufweist, ist ein vollumfänglich geschlossener Klemmkörper stabiler.

Gemäß einer weiteren Ausführungsform weist die Aussparung einen ersten Aufnahmeschlitz und einen um 90° gegenüber dem ersten Aufnahmeschlitz versetzten zweiten Aufnahmeschlitz auf.

Der erste Aufnahmeschlitz und/oder der zweite Aufnahmeschlitz ist derart dimensioniert, dass beispielsweise ein Träger mit einem rechteckigen Profil darin aufgenommen werden kann.

Vorzugsweise kann der Träger wahlweise sowohl im ersten Aufnahmeschlitz als auch im zweiten Aufnahmeschlitz aufgenommen werden.

Nach einer weiteren Ausführungsform sind der erste Aufnahmeschlitz und der zweite Aufnahmeschlitz miteinander verbunden.

Der erste Aufnahmeschlitz und der zweite Aufnahmeschlitz bilden somit gemeinsam die Aussparung.

Vorzugsweise können der erste Aufnahmeschlitz und der zweite Aufnahmeschlitz ineinander übergehen und/oder sich abschnittsweise überschneiden.

Dies ermöglicht eine platzsparende Ausgestaltung der Klemmvorrichtung.

Alternativ können der erste Aufnahmeschlitz und der zweite Aufnahmeschlitz getrennt voneinander sein.

Gemäß einer weiteren Ausführungsform erstreckt sich der zweite Aufnahmeschlitz mittig vom ersten Aufnahmeschlitz aus.

Auch dadurch wird eine platzsparende Ausgestaltung der Klemmvorrichtung ermöglicht.

Nach einer weiteren Ausführungsform weist der Klemmkörper eine Klemmelementaussparung für das Klemmelement auf, welche in den zweiten Aufnahmeschlitz mündet.

Die Klemmelementaussparung kann vorzugsweise ein Gewinde für das Klemmelement aufweisen. Das Klemmelement hält somit in der Klemmelementaussparung.

Das Klemmelement wird durch die Klemmelementaussparung geführt, z.B. hindurch geschraubt, und erstreckt sich in den zweiten Aufnahmeschlitz hinein. Das Klemmelement wird so lange eingeführt bzw. eingeschraubt, bis es den Montageabschnitt erreicht. Der Montageabschnitt wird dann zwischen dem Klemmelement und dem Klemmkörper eingeklemmt.

Gemäß einer weiteren Ausführungsform weist das Klemmelement eine Länge auf, die mindestens so groß ist wie die Differenz aus der Längserstreckung des zweiten Aufnahmeschlitzes und der Stärke des Montageabschnitts.

Vorzugsweise weist die Länge des Klemmelements zusätzlich die Stärke des Klemmkörpers bzw. die Länge der Klemmelementaussparung auf.

Das Klemmelement ist somit lang genug, um den Montageabschnitt festzuklemmen.

Nach einer weiteren Ausführungsform ist das Klemmelement länger als die Längserstreckung des ersten Aufnahmeschlitzes und/oder des zweiten Aufnahmeschlitzes.

Das Klemmelement ist folglich lang genug, um den Montageabschnitt festzuklemmen.

Die Erfindung betrifft ferner eine Klemmvorrichtung eines erfindungsgemäßen Dachhakens.

Die Klemmvorrichtung weist einen Klemmkörper und ein Klemmelement, vorzugsweise eine Schraube, auf.

Alle hier beschriebenen Aspekte, Ausführungsformen und Merkmale der Erfindung können, vorzugsweise auch losgelöst von der konkreten Ausgestaltung, in deren Zusammenhang sie erwähnt werden, jeweils miteinander kombiniert werden. Vorzugsweise können alle Gegenstände der abhängigen Ansprüche untereinander und mit jedem Gegenstand der unabhängigen Ansprüche kombiniert werden.

Die Erfindung wird im Folgenden beispielhaft unter Bezugnahme auf die Zeichnungen beschrieben. Es zeigen:
- Fig. 1: eine Seitenansicht einer Ausführungsform eines erfindungsgemäßen Dachhakens,
- Fig. 2: eine Vorderansicht des Dachhakens gemäß Fig. 1 ohne Dachelement und Montageeinheit,
- Fig. 3: eine Perspektivansicht des Dachhakens gemäß Fig. 1 ohne Dachelement und Montageeinheit,
- Fig. 4: eine Perspektivansicht einer weiteren Ausführungsform eines erfindungsgemäßen Dachhakens mit verstellter Klemmvorrichtung,
- Fig. 5: eine Draufsicht einer Ausführungsform einer Klemmvorrichtung eines erfindungsgemäßen Dachhakens,
- Fig. 6: eine Schnittansicht gemäß A-A in Fig. 5, und
- Fig. 7: eine Seitenansicht einer weiteren Ausführungsform eines erfindungsgemäßen Dachhakens.

Zunächst ist zu bemerken, dass die dargestellten Ausführungsformen rein beispielhafter Natur sind. So können einzelne Merkmale nicht nur in der gezeigten Kombination, sondern auch in Alleinstellung oder in anderen technisch sinnvollen Kombinationen realisiert sein. Beispielsweise können die Merkmale einer Ausführungsform beliebig mit Merkmalen einer anderen Ausführungsform kombiniert werden.

Enthält eine Figur ein Bezugszeichen, welches im unmittelbar zugehörigen Beschreibungstext nicht erläutert wird, so wird auf die entsprechenden vorhergehenden bzw. nachfolgenden Ausführungen in der Figurenbeschreibung Bezug genommen. So werden für gleiche bzw. vergleichbare Bauteile in den Figuren dieselben Bezugszeichen verwendet und diese nicht nochmals erläutert.

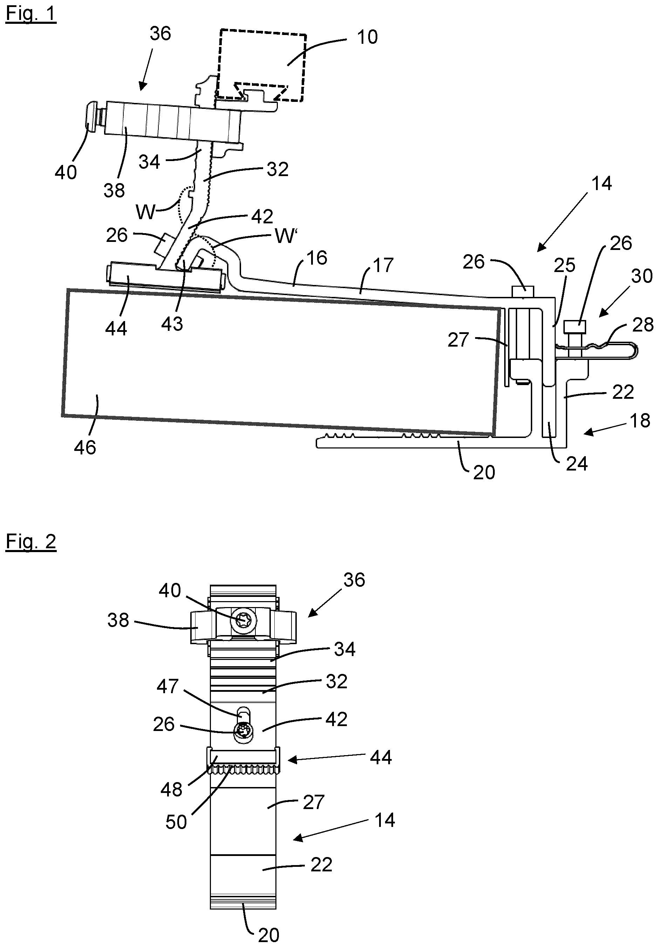

Fig. 1 zeigt einen Dachhaken zur Befestigung einer gestrichelt dargestellten Montageeinheit 10, vorzugsweise Montageschiene, an einem Dachelement 46.

Der Dachhaken weist einen Grundträger 14 mit einem Bügel 16 und einem Haken 18 zur Befestigung des Dachhakens am Dachelement 46 auf.

Der Bügel 16 ist höhenverstellbar mit dem Haken 18 verbunden.

Der Haken 18 weist eine plattenförmige Basis 20 sowie einen sich senkrecht von der Basis 20 aus erstreckenden Befestigungsbereich 22 auf. Der Befestigungsbereich 22 hat einen Schlitz 24 zur Aufnahme des Bügels 16.

Der Bügel 16 weist einen im Wesentlichen parallel zur Basis 20 orientierten Bügelkörper 17 sowie einen rechtwinklig dazu abgewinkelten Bügelabschnitt 25 auf. Der abgewinkelte Bügelabschnitt 25 wird in den Schlitz 24 gesteckt.

Die Fixierung kann schließlich über eine Schraube 26 erfolgen.

Eine Abstützvorrichtung 27 des Bügels 16 stützt den Bügel 16 ab und verhindert ein Verkippen.

Der Befestigungsbereich 22 kann an gegenüberliegenden Seiten des Schlitzes 24 jeweils eine Aussparung für eine Schraube 26 aufweisen. An einer Aussparung, welche beispielsweise ein Gewinde aufweisen kann, kann hierbei die Schraube 26 zum Fixieren des Bügels 16 befestigt werden. An der anderen Aussparung, welche beispielsweise ein Gewinde aufweisen kann, kann optional eine Klemme 28 einer Erdungsvorrichtung 30 über eine Schraube 26 befestigt werden.

Der Dachhaken weist einen Träger 32, vorzugsweise Schienenträger, mit einem Montageabschnitt 34 zur Befestigung der Montageeinheit 10 am Dachhaken auf.

Die Montageeinheit 10 kann beispielsweise über eine Klemmvorrichtung 36 am Montageabschnitt 34 des Trägers 32 festgeklemmt werden.

Die Klemmvorrichtung 36 weist einen Klemmkörper 38 sowie eine als Schraube 40 ausgebildetes Klemmelement auf.

Der Träger 32 ist an einem Fixierabschnitt 42 höhenverstellbar mit einem Fixierbereich 43 des Grundträgers 14 verbunden. Zum Fixieren kann hierbei eine Schraube 26 eingesetzt werden.

Der Fixierabschnitt 42 ist gegenüber dem Montageabschnitt 34 vorzugsweise abgewinkelt, z.B. um einen Winkel W von 157°.

Der Träger 32 weist eine Auflage 44 zum Aufliegen auf dem Dachelement 46 auf.

Der Fixierabschnitt 42 kann sich unter einem Winkel W' von z.B. 65° mittig von der Auflage 44 aus erstrecken.

Wie in Fig. 2 zu sehen ist, weist der Fixierabschnitt 42 ein Langloch 47 auf, in das die Schraube 26 eingreifen kann.

Ferner ist ersichtlich, dass die Auflage 44 einen Auflagekörper 48 sowie eine Gummiunterlage 50 aufweist. Die Gummiunterlage 50 kann an ihrer Unterseite eine Riffelung aufweisen.

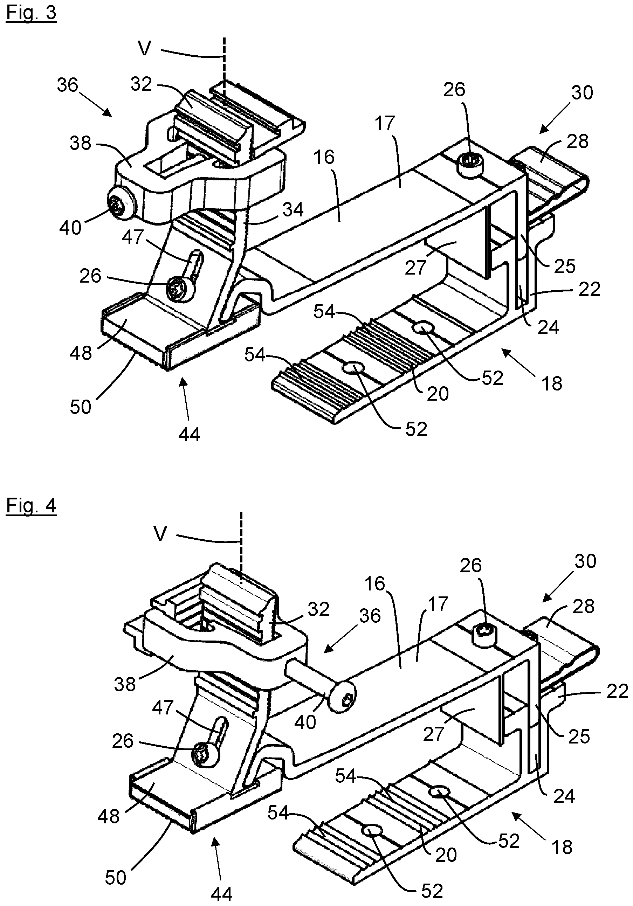

In Fig. 3 ist dargestellt, dass die plattenförmige Basis 20 Plattenaussparungen 52 aufweisen kann. An den Plattenaussparungen 52 kann die Basis 20 beispielsweise mittels Schrauben und/oder Bolzen an einer Dachkonstruktion 12 befestigt, z.B. verschraubt, werden.

Die plattenförmige Basis 20 weist auf einer dem Bügel 16 zugewandten Seite mehrere Riffelungen 54 auf. Diese ermöglichen einen guten Halt an der Unterseite des Dachelements 46.

Die Klemmvorrichtung 36 mit dem Klemmkörper 38 und dem als Schraube 40 ausgebildeten Klemmelement ist in einer ersten Position zur horizontalen Anbringung der Montageeinheit 10 am Montageabschnitt 34 befestigt.

In Fig. 4 ist die Klemmvorrichtung 36 in einer um 90° (bezüglich einer vertikalen Achse V) gegenüber der ersten Position versetzten zweiten Position zur geneigten Anbringung der Montageeinheit 10 am Montageabschnitt 34 befestigt.

Die Klemmvorrichtung 36 kann auch in der zweiten Position um 180° (bezüglich einer horizontalen Ebene) gedreht sein.

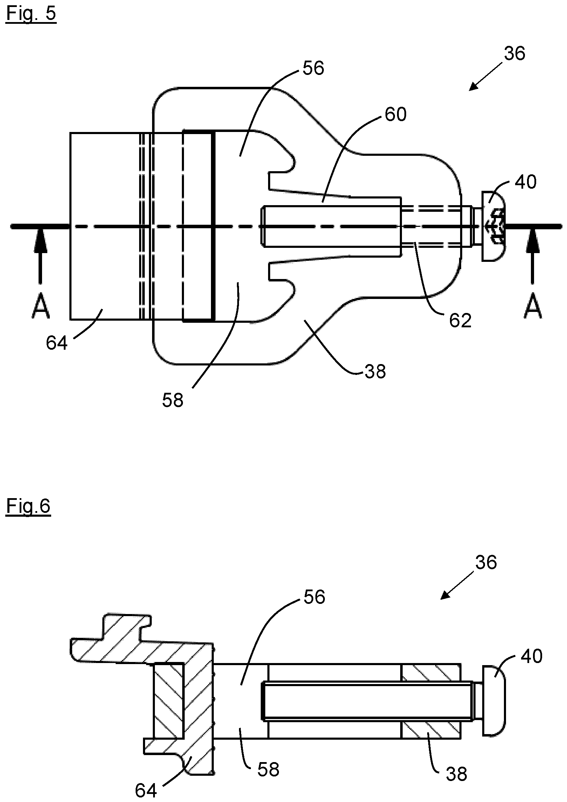

Wie in Fig. 5 zu sehen ist, weist die Klemmvorrichtung 36 einen Klemmkörper 38 auf, der eine Aussparung 56 zum Aufnehmen des Montageabschnitts 34 vollumfänglich umschließt.

Die Aussparung 56 weist einen ersten Aufnahmeschlitz 58 und einen um 90° gegenüber dem ersten Aufnahmeschlitz 58 versetzten zweiten Aufnahmeschlitz 60 auf.

Der erste Aufnahmeschlitz 58 und der zweite Aufnahmeschlitz 60 sind miteinander verbunden.

Der zweite Aufnahmeschlitz 60 erstreckt sich mittig vom ersten Aufnahmeschlitz 58 aus.

Der Klemmkörper 38 weist eine Klemmelementaussparung 62 für das Klemmelement 40 auf, welche in den zweiten Aufnahmeschlitz 60 mündet.

Das Klemmelement 40 ist mindestens so lang wie die Differenz aus der Längserstreckung des zweiten Aufnahmeschlitzes 60 samt Klemmelementaussparung 62 und der Stärke des (in Fig. 5 nicht dargestellten) Montageabschnitts 34.

Auch ist das Klemmelement 40 länger als die Längserstreckung des ersten Aufnahmeschlitzes 58 bzw. als die Längserstreckung des zweiten Aufnahmeschlitzes 60.

In Fig. 6 ist eine Schnittansicht der Klemmvorrichtung 36 dargestellt.

Eine Haltestruktur 64 der Klemmvorrichtung 36 kann mit dem Klemmkörper 38 fest, vorzugsweise unlösbar, verbunden sein. Alternativ kann die Haltestruktur 64 als separates Bauteil ausgebildet sein.

In der zweiten Position kann die Klemmvorrichtung 36 um 180° (bezüglich einer horizontalen Ebene) gedreht sein. Dadurch ändert sich auch die Orientierung der Haltestruktur 64. Vorzugsweise ist die Orientierung der Haltestruktur 64 in der ersten Position und der zweiten Position jedoch gleich.

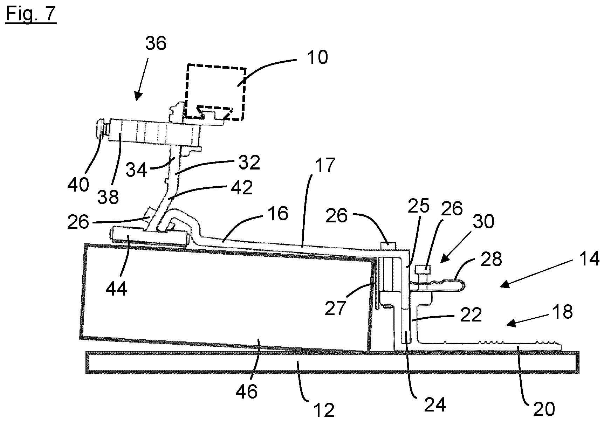

Fig. 7 zeigt einen Dachhaken zur Befestigung einer Montageeinheit 10 an einer Dachkonstruktion 12.

Der Haken 18 ist gegenüber Fig. 1 um 180° versetzt und an der Basis 20 mit der Dachkonstruktion 12 verschraubt.

### Bezugszeichenliste

- 10: Montageeinheit, Montageschiene
- 12: Dachkonstruktion
- 14: Grundträger
- 16: Bügel
- 17: Bügelkörper
- 18: Haken
- 20: Basis
- 22: Befestigungsbereich
- 24: Schlitz
- 25: Bügelabschnitt
- 26: Schraube
- 27: Abstützvorrichtung
- 28: Klemme
- 30: Erdungsvorrichtung
- 32: Träger, Schienenträger
- 34: Montageabschnitt
- 36: Klemmvorrichtung
- 38: Klemmkörper
- 40: Schraube, Klemmelement
- 42: Fixierabschnitt
- 43: Fixierbereich
- 44: Auflage
- 46: Dachelement
- 47: Langloch
- 48: Auflagekörper
- 50: Gummiunterlage
- 52: Plattenaussparung
- 54: Riffelung
- 56: Aussparung
- 58: erster Aufnahmeschlitz
- 60: zweiter Aufnahmeschlitz
- 62: Klemmelementaussparung
- 64: Haltestruktur

- V: vertikale Achse
- W, W': Winkel

## Patentansprüche

1. Dachhaken zur Befestigung einer Montageeinheit (10), vorzugsweise Montageschiene, an einer Dachkonstruktion (12) und/oder an einem Dachelement (46), aufweisend
einen Grundträger (14) zur Befestigung des Dachhakens an der Dachkonstruktion (12) und/oder dem Dachelement (46), und
einen Träger (32), vorzugsweise Schienenträger, mit einem Montageabschnitt (34) zur Befestigung der Montageeinheit (10) am Dachhaken, und eine Klemmvorrichtung (36) mit einem Klemmkörper (38) und einem Klemmelement (40), vorzugsweise Schraube, wobei
die Klemmvorrichtung (36) dazu ausgebildet ist, in einer ersten Position zur horizontalen Anbringung der Montageeinheit (10) und einer um 90° gegenüber der ersten Position versetzten zweiten Position zur geneigten Anbringung der Montageeinheit (10) am Montageabschnitt (34) befestigbar zu sein.

2. Dachhaken nach Anspruch 1,
**dadurch gekennzeichnet,**
**dass** die Klemmvorrichtung (36) einen Klemmkörper (38) mit einer Aussparung (56) zum Aufnehmen des Montageabschnitts (34) aufweist.

3. Dachhaken nach Anspruch 2,
**dadurch gekennzeichnet,**
**dass** der Klemmkörper (38) die Aussparung (56) vollumfänglich umschließt.

4. Dachhaken nach Anspruch 2 oder 3,
**dadurch gekennzeichnet,**
**dass** die Aussparung (56) einen ersten Aufnahmeschlitz (58) und einen um 90° gegenüber dem ersten Aufnahmeschlitz (58) versetzten zweiten Aufnahmeschlitz (60) aufweist.

5. Dachhaken nach Anspruch 4,
**dadurch gekennzeichnet,**
**dass** der erste Aufnahmeschlitz (58) und der zweite Aufnahmeschlitz (60) miteinander verbunden sind.

6. Dachhaken nach Anspruch 4 oder 5,
**dadurch gekennzeichnet,**
**dass** sich der zweite Aufnahmeschlitz (60) mittig vom ersten Aufnahmeschlitz (58) aus erstreckt.

7. Dachhaken nach einem der Ansprüche 4 bis 6,
**dadurch gekennzeichnet,**
**dass** der Klemmkörper (38) eine Klemmelementaussparung (62) für das Klemmelement (40) aufweist, welche in den zweiten Aufnahmeschlitz (60) mündet.

8. Dachhaken nach einem der Ansprüche 4 bis 7,
**dadurch gekennzeichnet,**
**dass** das Klemmelement (40) eine Länge aufweist, die mindestens so groß ist wie die Differenz aus der Längserstreckung des zweiten Aufnahmeschlitzes (60) und der Stärke des Montageabschnitts (34).

9. Dachhaken nach einem der Ansprüche 4 bis 8,
**dadurch gekennzeichnet,**
**dass** das Klemmelement (40) länger als die Längserstreckung des ersten Aufnahmeschlitzes (58) und/oder des zweiten Aufnahmeschlitzes (60) ist.

10. Klemmvorrichtung (36) eines Dachhakens nach einem der vorhergehenden Ansprüche.
